**Europäisches Patentamt**

**European Patent Office**

**Office européen des brevets**

(19)

(11) Veröffentlichungsnummer: **0 065 079**
**B1**

# (12) EUROPÄISCHE PATENTSCHRIFT

(45) Veröffentlichungstag der Patentschrift:
30.05.84

(21) Anmeldenummer: 82101723.3

(22) Anmeldetag: 05.03.82

(51) Int. Cl.³: **C 09 D 3/727**, C 08 L 25/08

(54) **Wässrige Dispersion eines Mischpolymerisates zur Verwendung als Bindemittel in Anstrichfarben und Kunstharzputzen.**

(30) Priorität: 07.05.81 DE 3117980

(43) Veröffentlichungstag der Anmeldung:
24.11.82 Patentblatt 82/47

(45) Bekanntmachung des Hinweises auf die Patenterteilung:
30.05.84 Patentblatt 84/22

(84) Benannte Vertragsstaaten:
**DE FR GB IT NL SE**

(56) Entgegenhaltungen:
**DE - B - 2 249 299**
**DE - B - 2 438 151**

(73) Patentinhaber: CHEMISCHE WERKE HÜLS AG, - RSP
Patente / PB 15 - Postfach 13 20, D-4370 Marl 1 (DE)

(72) Erfinder: Türck, Ulrich, Dr., Gersthofener Strasse 20,
D-4370 Marl (DE)
Erfinder: Schlüter, Herbert, Dr., Hessische Strasse 4,
D-4370 Marl (DE)
Erfinder: Tetzner, Heinz, Max-Liebermann-Strasse 2,
D-4370 Marl (DE)

## Beschreibung

Es ist bekannt, wässrige Dispersionen von Mischpolymerisaten als Bindemittel in Anstrichfarben und Kunstharzputzen einzusetzen. Die Mischpolymerisate zeigen ein thermoplastisches bis kautschukartiges Verhalten.

So ist es aus der US-PS 3 301 806 bekannt, wässrige Dispersionen eines Styrol/(Meth)acrylsäure-($C_1$- bis $C_{20}$-alkyl)ester/Itaconsäure-Mischpolymerisats als Bindemittel in Anstrichfarben einzusetzen. Die Modifizierungskomponente Itaconsäure verleiht den Mischpolymerisaten ein für damalige Verhältnisse hohes Pigmentbindevermögen und dadurch den Anstrichen eine mehr oder weniger hohe Nassscheuerfestigkeit.

Aus der DE-PS 24 38 151 ist es bekannt, wässrige Dispersionen eines Styrol/Fumarsäure($C_3$- bis $C_6$-alkyl)ester/Butadien-Mischpolymerisats als Bindemittel in Anstrichfarben einzusetzen.

Die copolymerisierbare Modifizierungskomponente bei der Herstellung der Mischpolymerisate ist das Amid einer $\alpha,\beta$-ungesättigten Carbonsäure, insbesondere Acrylsäureamid (Acrylamid), gegebenenfalls zusammen mit einer $\alpha,\beta$-ungesättigten Carbonsäure, insbesondere Acrylsäure.

Die Dispersionen des geschilderten Standes der Technik erfüllen nicht zugleich alle wesentlichen Anforderungen der Praxis, wie durch die folgenden Vergleichsbeispiele deutlich gemacht wird.

Die Aufgabe bestand darin, Dispersionen bereitzustellen, welche zugleich alle wesentlichen Anforderungen der Praxis erfüllen, und zwar insbesondere hinsichtlich ihrer Elektrolytstabilität, ihrer pH-Abhängigkeit der Viskosität sowie der Lagerstabilität der mit den Dispersionen hergestellten Farben, der Nassscheuerfestigkeit der mit den Farben erzeugten Anstriche, welche wesentlich über dem gemäss der US-PS 3 301 806 erreichbaren Niveau liegen sollte, und des Abdeckvermögens der Anstriche gegen Gips- und Kalkflecken des Untergrundes.

Die Aufgabe wird durch die Dispersionen gemäss dem Patentanspruch gelöst.

Das Ergebnis ist überraschend, insbesondere in Anbetracht der grossen Zahl der Kombinationen der aus dem Stand der Technik bekannten Modifizierungskomponenten. Die wechselseitigen Auswirkungen der Modifizierungskomponenten auf das oben umrissene Gesamteigenschaftsbild waren im einzelnen nicht vorhersehbar.

Den anmeldungsgemässen Dispersionen können die Mischpolymerisate gemäss Merkmal 1 oder 2 des Patentanspruchs zugrunde liegen.

Die Mischpolymerisate enthalten jeweils eine hartmachende (Merkmal 1.1 bzw. 2.1) und eine weichmachende Komponente (Merkmal 1.2 und 1.3 bzw. 2.2).

Aufgrund allgemeiner Erfahrungen oder auch einfacher orientierender Versuche trifft man eine solche Auswahl der gegensätzlich wirkenden Komponenten, dass die minimale Filmbildungstemperatur der Dispersionen (MFT) im Bereich zwischen 0 und 50°C liegt.

Im folgenden werden unter Teilen (T.) Gewichtsteile verstanden.

Die Mischpolymerisate gemäss Merkmal 1 werden vorzugsweise aus 40 bis 55 T. Styrol und 45 bis 60 T. Fumarsäuredibutylester, bezogen auf 100 T. der gesamten Monomeren, hergestellt.

Die Mischpolymerisate gemäss Merkmal 2 werden vorzugsweise aus 45 bis 5 T. Styrol und 45 bis 55 T. Acrylsäure-($C_2$- bis $C_8$-primär- oder sekundär-alkyl)ester hergestellt.

Das Merkmal 3.1 ist vorzugsweise 1,5 bis 3 T. (Meth)acrylsäure, insbesondere Acrylsäure.

Die Modifizierungskomponente weist vorzugsweise ein Gewichtsverhältnis von (Meth)acrylsäure:Itaconsäure im Bereich von 1:1 bis 60:1 und besonders bevorzugt ein Gewichtsverhältnis von Acrylsäure:Itaconsäure im Bereich von 2:1 bis 30:1 auf.

Das Merkmal 3.2 ist vorzugsweise 0,1 bis 1 T. Itaconsäure.

Das Merkmal 3.3 ist vorzugsweise 0,5 bis 15 T. Acrylamid. Seine Menge ist umso grösser, je grösser die Gesamtmenge der Säuren gemäss den Merkmalen 3.1 und 3.2 ist.

Die Herstellung der Dispersionen kann im batch- oder im Zulaufverfahren erfolgen.

Die Dispersionen gemäss Merkmal 1 werden vorzugsweise im batch-Verfahren, die Dispersionen gemäss Merkmal 2 vorzugsweise im Zulaufverfahren hergestellt.

Die Herstellung der Dispersionen erfolgt bei einer Polymerisationstemperatur im Bereich zwischen 30 und 90°C und bei einem pH-Wert im Bereich zwischen 2 und 7.

Als Initiatoren werden übliche Persulfate oder Redoxsysteme eingesetzt.

Als Emulgatoren werden übliche, sulfat- oder sulfonatgruppenhaltige Aniontenside in solchen Mengen eingesetzt, dass der mittlere Teilchendurchmesser im Bereich zwischen 50 und 300 nm liegt.

Neben den anionischen Emulgatoren können zusätzlich nichtionische Emulgatoren eingesetzt werden. Als solche kommen Oxethylierungsprodukte von Fettalkholen oder Alkylphenolen mit einem Oxethylierungsgrad von 7 bis 100 in Frage. Die nichtionischen Emulgatoren können auch nach der Polymerisation zugesetzt werden.

Zur Herstellung von Anstrichfarben und Kunstharzputzen wird die Dispersion nach der Polymerisation auf einen pH-Wert von 7 bis 9 und auf einen Festkörpergehalt von ca. 50 Gew.% eingestellt. Die Dispersion hat dann eine gute Elektrolyt- und Froststabilität sowie eine geringe pH-Abhängigkeit der Viskosität.

Mit herkömmlichen Pigmentpasten lassen sich aus dieser Dispersion Anstrichfarben herstellen, die sich durch eine gute Lagerstabilität, eine sehr gute Nassscheuerfestigkeit der erzeugten Anstriche und ein gutes Abdeckvermögen der Anstriche gegen Gips- und Kalkflecken des Untergrundes auszeichnen und damit ein gutes und ausgewogenes Gesamteigenschaftsbild aufweisen.

Die folgenden Beispiele dienen zur Erläuterung der Erfindung. Die nicht erfindungsgemässen Vergleichsbeispiele sind durch grosse Buchstaben bezeichnet. Prozente bedeuten Gewichtsprozente, falls nicht anders angegeben.

Im folgenden steht AS für Acrylsäure, IS für Itaconsäure und AA für Acrylamid.

Die Prüfungen werden nach folgenden Vorschriften durchgeführt.

Elektrolytstabilität der Dispersion

20 ml einer 50%igen Dispersion werden mit 20 ml 10%iger wässriger Calciumchloridlösung versetzt. Die Dispersion gilt als elektrolytstabil, wenn nach zweistündigem Stehen keine Agglomerat- oder Koagulatbildung eintritt.

pH-Abhängigkeit der Viskosität der Dispersionen

Die Viskosität der 50%igen Dispersion wird bei einem pH-Wert von 8,5 bei 23°C gemessen (Rheometer STV, Messsystem C III bzw. B III, Fa. Contraves, Zürich). 100 ml der Dispersion werden mit 1 ml konzentriertem, wässrigem Ammoniak versetzt, wobei sich ein pH-Wert im Bereich von 9 bis 10 einstellt. Dann wird die Viskosität erneut gemessen.

Lagerstabilität der Farben

Aus den Dispersionen und üblichen wässrigen Pigmentanteigungen (Pigmentpasten) werden weisse Farben mit einer Pigmentvolumenkonzentration (PVK: Volumenanteil des Pigments und Füllstoffs am Gesamtvolumen der Trockensubstanz der Anstrichfarbe bzw. des damit erzeugten, trockenen Anstrichs) von ca. 80% angesetzt.

Die Farben werden 14 Tage bei 50°C gelagert. Danach wird ihre Viskosität bei 23°C gemessen (Rheometer STV, Messsystem C III). Die Lagerstabilität ist gut, wenn die Viskosität nicht wesentlich grösser ist als die einer entsprechenden Farbe auf Basis einer vergleichbaren, handelsüblichen Dispersion.

Prüfung der Nassscheuerfestigkeit

Die weissen Farben werden nach DIN 53778 auf Prüfplatten aufgetragen, 28 Tage gelagert, falls nicht anders angegeben, und gescheuert, charakterisiert durch die Zahl der Scheuercyclen, bis der Untergrund durchkommt.

Abdeckvermögen gegen Gips- und Kalkflecken

Auf Hartfaserplatten wird Gips aufgefleckt. Nach eintägiger Trocknung werden die Platten mit den wie oben zubereiteten Farben, die zusätzlich farbig abgetönt werden um das Durchkommen der Flecken gut erkennen zu können, überstrichen. Beurteilt wird visuell nach einem Notensystem von 1 bis 5, wobei 1 die beste Note ist und 3 noch eine gute Abdeckung bedeutet.

Beispiele 1, 2, A und B

Aus den in Tabelle 1 angegebenen Teilen AS, IS und AA sowie den auf 100 ergänzenden Teilen des aus Styrol, Fumarsäuredibutylester und Butadien (Gewichtsverhältnis 44/47/5) bestehenden Monomergemisches werden wässrige Dispersionen von Mischpolymerisaten hergestellt. Sie haben eine MFT von ca. 10°C.

Folgende Testergebnisse werden erhalten:

Tabelle 1

| Beispiel | 1 | 2 | A DE-PS 24 38 151 | B |
|---|---|---|---|---|
| Teile AS | 2,5 | 2,5 | 2,75 | — |
| Teile IS | 0,25 | 0,5 | — | 2,0 |
| Teile AA | 1,5 | 1,0 | 0,75 | 0,75 |
| Elektrolytstabilität | + | + | + | — |
| Viskosität, pH 8,5 | 992 | 493 | 709 | 57 |
| [mPa·s] pH 9 bis 10 | 970 | 717 | 1604 | 54 |
| Lagerstabilität [1] [mPa·s] | 8780 | 8410 | 7990 | 23 130 |
| Nassscheuerfestigkeit [Scheuercyclen] | 1450 | 2340 | 1025 | 3285 |
| Abdeckvermögen | 2 | 2 bis 3 | 2 bis 3 | 2 bis 3 |

[1] Die Viskosität einer entsprechenden Farbe auf Basis einer vergleichbaren, handelsüblichen Dispersion beträgt 8 230 mPa·s.

Die erfindungsgemässen Beispiele 1 und 2 zeigen ein gutes und ausgewogenes Gesamteigenschaftsbild.

Beispiel A zeigt eine verhältnismässig hohe pH-Abhängigkeit der Viskosität der Dispersion sowie eine weniger gute Nassscheuerfestigkeit.

Beispiel B zeigt keine Elektrolytstabilität und eine unerwünscht niedrige Viskosität der Dispersion und eine mangelhafte Lagerstabilität der Farbe. Die Dispersion gemäss Beispiel B ist ausserdem nicht froststabil.

Beispiele 3 und C bis G

Aus den in Tabelle 2 angegebenen Teilen AS, IS und AA, soweit nicht anders angegeben, sowie den auf 100 ergänzenden Teilen des aus Styrol und Acrylsäure-2-ethylhexylester (Gewichtsverhältnis 50,5/46,5) bestehenden Monomergemisches werden wässrige Dispersionen von Mischpolymerisaten hergestellt. Sie haben eine MFT von ca. 11°C.

Folgende Testergebnisse werden erhalten:

Tabelle 2

| Beispiel | 3 | C | D | E US-PS 3 301 806 | F | G |
|---|---|---|---|---|---|---|
| Teile AS | 2,0 | 2,0 | 2,0 | — | 1,0 | 2,0 |
| Teile IS | 0,5 | — | 1,0 | 1,0 | 3,0 | —[1] |
| Teile AA | 0,5 | 0,5 | — | — | 1,0 | 0,5 |
| Elektrolytstabilität | + | + | — | + | — | + |
| Viskosität, pH 8,5 | 165 | 162 | 123 | 106 | 71 | 125 |
| [mPa·s] pH 9 bis 10 | 231 | 184 | 184 | 104 | 69 | 175 |
| Lagerstabilität[2] [mPa·s] | 3800 | 3000 | 6700 | 3400 | 7570 | 1360 |
| Nassscheuerfestigkeit [Scheuercyclen][3] | 1135 | 685 | 1190 | 360 | 1095 | 630 |
| Abdeckvermögen | 3 | 3 | 5 | 4 | 5 | 4 |

[1] 0,5 Teile Fumarsäure
[2] die Viskosität einer entsprechenden Farbe auf Basis einer vergleichbaren, handelsüblichen Dispersion beträgt 3850 mPa·s.
[3] Bestimmt nach 7tägiger Lagerung.

Das erfindungsgemässe Beispiel 3 zeigt ein gutes und ausgewogenes Gesamteigenschaftsbild.

Beispiel C zeigt eine unzureichende Nassscheuerfestigkeit.

Beispiel D zeigt keine Elektrolytstabilität, eine schlechte Lagerstabilität und ein schlechtes Abdeckvermögen.

Beispiel E zeigt eine unzureichende Nassscheuerfestigkeit und ein unzureichendes Abdeckvermögen.

Beispiel F zeigt keine Elektrolytstabilität, eine schlechte Lagerstabilität und ein schlechtes Abdeckvermögen.

Beispiel G zeigt eine unzureichende Nassscheuerfestigkeit, welche nicht einmal den Wert von Beispiel C erreicht, sowie ein unzureichendes Abdeckvermögen.

**Patentanspruch**

1. Wässrige Dispersion eines Mischpolymerisates zur Verwendung als Bindemittel in Anstrichmitteln und Kunstharzputzen, wobei das Mischpolymerisat entweder aus

1.1 35 bis 65 Gew.T. Styrol und/oder substituiertes Styrol,
1.2 35 bis 65 Gew.T. Fumarsäuredi-($C_2$- bis $C_6$-alkyl)-ester,
1.3 0 bis 15 Gew.T Butadien, substituiertes Butadien, Acrylsäure-2-ethylhexylester oder ihrer Gemische und
1.4 0,2 bis 8 Gew.T. einer oder mehrerer copolymerisierbarer Carbonsäure-, Carbonsäureamid- oder N-substituierter Carbonsäureamid-Gruppen enthaltender Modifizierungskomponenten,

oder aus

2.1 35 bis 65 Gew.T. Styrol und/oder substituiertes Styrol,
2.2 35 bis 65 Gew.T. Acrylsäure-($C_2$- bis $C_8$-alkyl)-ester und
2.3 0,2 bis 8 Gew.T. der Modifizierungskomponente(n) gemäss Merkmal 1.4,
bezogen auf 100 Gew.T. der gesamten Monomeren,
hergestellt worden ist,
dadurch gekennzeichnet,
dass die Modifizierungskomponenten
3.1 0,3 bis 3,5 Gew.T. (Meth)acrylsäure,
3.2 0,05 bis 2,5 Gew.T. Itaconsäure und
3.3 0,1 bis 2,5 Gew.T. (Meth)acrylsäureamid sind.

**Claim**

An aqueous dispersion of a mixed polymer for use as a binder in coating compositions and synthetic resin plasters, the mixed polymer being produced either from

1.1 from 35 to 65 parts by weight of styrene and/or a substituted styrene,
1.2 from 35 to 65 parts by weight of a di-$C_2$-$C_6$-alkyl fumarate,
1.3 from 0 to 15 parts by weight of butadiene, a substituted butadiene, 2-ethylhexyl acrylate or their mixtures, and
1.4 from 0.2 to 8 parts by weight of one or more modifying components containing a copolymerisable carboxylic acid, carboxylic acid amide or N-substituted carboxylic acid amide group,
or from
2.1 from 35 to 65 parts by weight of styrene and/or a substituted styrene,

2.2 from 35 to 65 parts by weight of a $C_2$-$C_8$-alkyl acrylate, and
2.3 from 0.2 to 8 parts by weight of the modifying component(s) as defined in 1.4 above,
based on 100 parts by weight of total monomers in each case, characterised in that the modifying components are
3.1 from 0.3 to 3.5 parts by weight of acrylic or methacrylic acid,
3.2 from 0.05 to 2.5 parts by weight of itaconic acid, and
3.3 from 0.1 to 2.5 parts by weight of acrylamide or methacrylamide.

**Revendication**

Dispersion aqueuse d'un produit de copolymérisation pour l'utilisation comme liant dans des peintures et des crépis la résine synthétique, dans laquelle le produit de copolymérisation a été préparé en partant, ou bien

1.1 de 35 à 65 parties en poids de styrène et/ou de styrène substitué,
1.2 de 35 à 65 parties en poids de fumarate de dialkyle en $C_2$ à $C_6$,

1.3 de zéro à 15 parties en poids de butadiène, de butadiène substitué, d'acrylate de 2-éthylhexyle ou de leurs mélanges,
et
1.4 de 0,2 à 8 parties en poids d'un ou plusieurs constituants modificateurs copolymérisables contenant des groupes acide carboxylique, carboxamide ou carboxamide substituée sur N,
ou bien
2.1 de 35 à 65 parties en poids de styrène et/ou de styrène substitué,
2.2 de 35 à 65 parties en poids d'acrylate d'alkyle en $C_2$ à $C_8$
et
2.3 de 0,2 à 8 parties en poids du ou des constituants modificateurs selon le point caractérisant 1.4,
par 100 parties en poids des monomères totaux,
ladite dispersion aqueuse étant caractérisée par le fait que les constituants modificateurs sont formés
3.1 de 0,3 à 3,5 parties en poids d'acide (méth)acrylique,
3.2 de 0,05 à 2,5 parties en poids d'acide itaconique et
3.3 de 0,1 à 2,5 parties en poids de (méth)acrylamide.